# EUROPEAN PATENT APPLICATION

(11) **EP 4 239 432 A1**
(43) Date of publication of application: **06.09.2023**
(21) Application number: 21885233.3
(22) Date of filing: 28.10.2021
(51) Int. Cl.: G05D 1/10, G01C 21/20

(54) **THREE-DIMENSIONAL TRAJECTORY PLANNING METHOD AND APPARATUS, DEVICE, AND STORAGE MEDIUM**

(30) Priority: 28.10.2020 CN 202011173488
(71) Applicant: Autoflight (Kunshan) Co., Ltd., Kunshan, Jiangsu 215345 (CN)
(72) Inventor: JU, Han, Shenzhen, Guangdong 518000 (CN)
(74) Representative: MERH-IP Matias Erny Reichl Hoffmann Patentanwälte PartG mbB
(86) International application number: PCT/CN2021/126874
(87) International publication number: WO 2022/089506

(57) **Abstract**

A three-dimensional trajectory planning method and apparatus, a device, and a storage medium is disclosed. The method includes: according to a driving mode, horizontal position information and heading information of a starting point, and horizontal position information and heading information of a target point, determining a horizontal Dubins path from the starting point to the target point; determining a vertical Dubins path from the starting point to the target point according to height information of the starting point and height information of the target point; and determining a three-dimensional driving trajectory from the starting point to the target point according to the horizontal Dubins path and the vertical Dubins path.

## Description

### CROSS-REFERENCES

This application is a national stage application claiming priority to PCT application number PCT/CN2021/126874 filed Oct. 28, 2021, which claims priority to China Patent Application No. 202011173488.X, filed on October 28, 2020, all of which is hereby incorporated by reference in their entireties.

### FIELD OF THE DISCLOSURE

The invention relates to the technical field of aircraft, in particular to a three-dimensional trajectory planning method, an apparatus, a device and a storage medium utilizing the method.

### BACKGROUND OF THE INVENTION

As automatic tasks such as mapping and inspection etc. are gaining wider and wider application in the field of unmanned aerial vehicle (UAV), how to plan the flight path for the aircraft autonomously more effectively and intelligently is a very important issue. At present, it is mostly based on the traditional side offset tracking or L1 guidance and other ways to track two adjacent waypoints, but this cannot guarantee that the aircraft's heading also meets the requirements to reach the next waypoint. Therefore, there is an urgent need for a method that can accurately plan a three-dimensional driving trajectory.

### SUMMARY OF THE INVENTION

Embodiments of the present application provide a three-dimensional trajectory planning method, an apparatus, a device, and a storage medium to achieve accurate planning of a three-dimensional driving trajectory.

The first aspect of the embodiment of the application provides a three-dimensional trajectory planning method, it comprises:
according to a driving mode, horizontal position information and heading information of a starting point, and horizontal position information and heading information of a target point, determining a horizontal Dubins path from the starting point to the target point;
according to the height information of the starting point and the height information of the target point, determining a vertical Dubins path from the starting point to the target point; according to the horizontal Dubins path and the vertical Dubins path, determining the three-dimensional driving trajectory from the starting point to the target point.

The second aspect of the embodiment of the application provides a three-dimensional trajectory planning apparatus, it comprises: a horizontal Dubins path determination module, a vertical Dubins path determination module and a three-dimensional driving trajectory determination module; wherein,
the horizontal Dubins path determination module for determining a horizontal Dubins path from the starting point to the target point according to a driving mode, horizontal position information and heading information of a starting point, and horizontal position information and heading information of a target point;
the vertical Dubins path determination module for determining a vertical Dubins path from the starting point to the target point according to the height information of the starting point and the height information of the target point;
the three-dimensional driving trajectory determination module for determining a three-dimensional driving trajectory from the starting point to the target point according to the horizontal Dubins path and the vertical Dubins path.

The third aspect of the embodiment of the application provides an electronic device, it comprises:
one or more processors;
a storage device for storing one or more programs;
when the one or more programs are executed by the one or more processors, causing the one or more processors to implement the three-dimensional trajectory planning method described in any embodiments of the application.

The fourth aspect of the embodiment of the application provides a computer-readable storage medium, on which a computer program stores, wherein, the program executed by a processor, which implements the three-dimensional track planning method described in any embodiments of the application.

The embodiments of the application provide a three-dimensional trajectory planning method, an apparatus, a device and a storage medium, firstly, according to a driving mode, horizontal position information and heading information of a starting point, and horizontal position information and heading information of a target point, determining a horizontal Dubins path from the starting point to the target point; then, according to the height information of the starting point and the height information of the target point, determining a vertical Dubins path from the starting point to the target point; finally, according to the horizontal Dubins path and the vertical Dubins path, determining the three-dimensional driving trajectory from the starting point to the target point. The present application is capable of accurately planning a three-dimensional driving trajectory given the starting position information and heading information, and the target position information and heading information.

### BRIEF DESCRIPTION OF DRAWINGS

Fig. 1 shows a schematic diagram of a first process of a three-dimensional trajectory planning method provided by the embodiment of the present application;
Fig. 2 shows a schematic diagram of a second process of a three-dimensional trajectory planning method provided by the embodiment of the present application;
Fig. 3 shows a schematic diagram of a third process of a three-dimensional trajectory planning method provided by the embodiment of the present application;
Fig. 4 shows a structure diagram of a structure of a three-dimensional trajectory planning apparatus provided by the embodiment of the present application;
Fig. 5 shows a block diagram of an electronic device used to implement the three-dimensional trajectory planning method of the embodiment of the present application.

### DETAILED DESCRIPTION

In order to make the purposes, technical solutions and advantages of the embodiments of this application clearer, the technical solution in the embodiments of this application will be described clearly and completely in combination with the drawings in the embodiments of this application. Obviously, the described embodiments are part of the embodiments of this application, not all of them.

### Embodiment 1

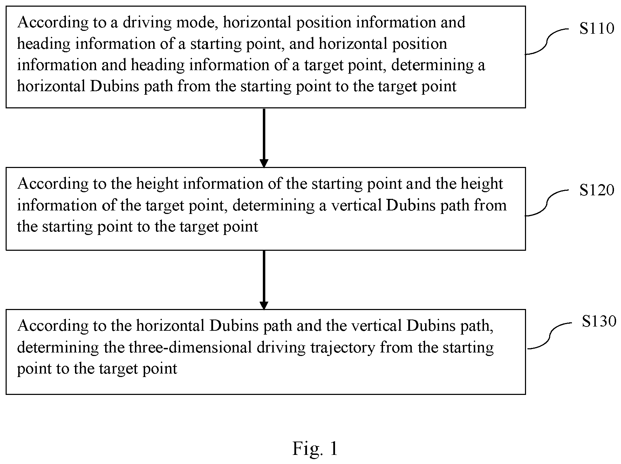

Fig. 1 is a schematic diagram of a first process of a three-dimensional trajectory planning method provided by the embodiment of the present application, which can be applicable to the situation where a flight device plans a three-dimensional trajectory for navigation before navigation and causes the flight device to follow the planned trajectory. A three-dimensional trajectory planning method provided by this embodiment can be performed by a three-dimensional trajectory planning apparatus provided by the embodiments of this application, which can be implemented by means of software and/or hardware and integrated in an electronic device for performing the method.

Referring to Fig. 1, the method of this embodiment includes but is not limited to the following steps:
S110, according to a driving mode, horizontal position information and heading information of a starting point, and horizontal position information and heading information of a target point, determining a horizontal Dubins path from the starting point to the target point.

Wherein, the flying device of this embodiment can be a device with flying function such as a UAV or an aircraft. The starting point and the target point are the starting point and the ending point of the planned driving trajectory of the flying device, respectively. The three-dimensional position and heading information of the starting point of the flight device and the three-dimensional position and heading information of the target point are obtained, wherein the three-dimensional position contains horizontal position information (i.e., longitude information and latitude information) and vertical position information (i.e., height information), and the heading information refers to the navigation direction of the flight device. The driving mode contains a landing guidance mode and a non-landing guidance mode.

In the specific embodiment of this application, the shortest path in the horizontal direction between the starting point and the target point is fitted using a Dubins curve according to the driving mode, the horizontal position information and heading information of the starting point, and the horizontal position information and heading information of the target point, and the shortest path in the horizontal direction is taken as the horizontal Dubins path.

S120, according to the height information of the starting point and the height information of the target point, determining a vertical Dubins path from the starting point to the target point.

In the specific embodiment of this application, according to the obtained height information of the starting point of the trajectory of the flight device and the height information of the target point, the height of the starting point is compared with the height of the target point, according to the result of the comparison, the shortest path in the vertical direction between the starting point and the target point, i.e., the vertical Dubins path. Specifically, if the difference between the height information of the target point and the height information of the starting point is greater than or equal to a first threshold value, the first sub-path of the vertical Dubins path from the starting point to the target point spirals up and the remaining sub-paths remain unchanged; if the difference between the height information of the target point and the height information of the starting point is less than or equal to the second threshold value, the end sub-path of the vertical Dubins path from the starting point to the target point spirals down and the remaining sub-paths remain unchanged; if the difference between the height information of the target point and the height information of the starting point is greater than the second threshold value and less than the first threshold value, the vertical Dubins path from the starting point to the target point climbs or descends throughout; wherein the first threshold value is greater than the second threshold value. Wherein, the first threshold value and the second threshold value are determined by height control law. The height control law is used for controlling the head-up state and thrust strength of the flight device so that the flight device can reach the height of the target point. The height control law is related to the height control accuracy, wherein the height control accuracy is the error range between the commanded height and the measured height of the flight device, wherein the commanded height is the height of the target point set by the user, and the measured height is the height actually traveled by the flight device when executing the commanded height command. For example, if the height control accuracy of the flight control device is 3 meters, the threshold value should be set more than 3 meters, such as 5 meters.

S130, according to the horizontal Dubins path and the vertical Dubins path, determining the three-dimensional driving trajectory from the starting point to the target point.

In the specific embodiment of this application, the horizontal Dubins path between the starting point and the target point is obtained by the driving mode, the horizontal position information and heading information of the starting point, and the horizontal position information and heading information of the target point. The vertical Dubins path between the starting point and the target point is obtained by the height information of the starting point and the height information of the target point. The three-dimensional driving trajectory from the starting point to the target point can be determined by combining the horizontal Dubins path and the vertical Dubins path.

The technical solution provided by this embodiment, at first, according to the driving mode, horizontal position information and heading information of the starting point, and horizontal position information and heading information of the target point, determining the horizontal Dubins path from the starting point to the target point; then, according to the height information of the starting point and the height information of the target point, determining a vertical Dubins path from the starting point to the target point; finally, determines the vertical Dubins path from the starting point to the target point based on the horizontal Dubins path and said vertical Finally, according to the horizontal Dubins path and the vertical Dubins path, determining the three-dimensional driving trajectory from the starting point to the target point. The embodiment of this application can extend the two-dimensional Dubins path algorithm to three-dimensional space, and can accurately plan a three-dimensional driving trajectory when position information and heading information of the starting point, and position information and heading information of the target point are given, and the technical solution of this application embodiment is simple and convenient to realize, easy to popularize, and has better versatility.

### Embodiment 2

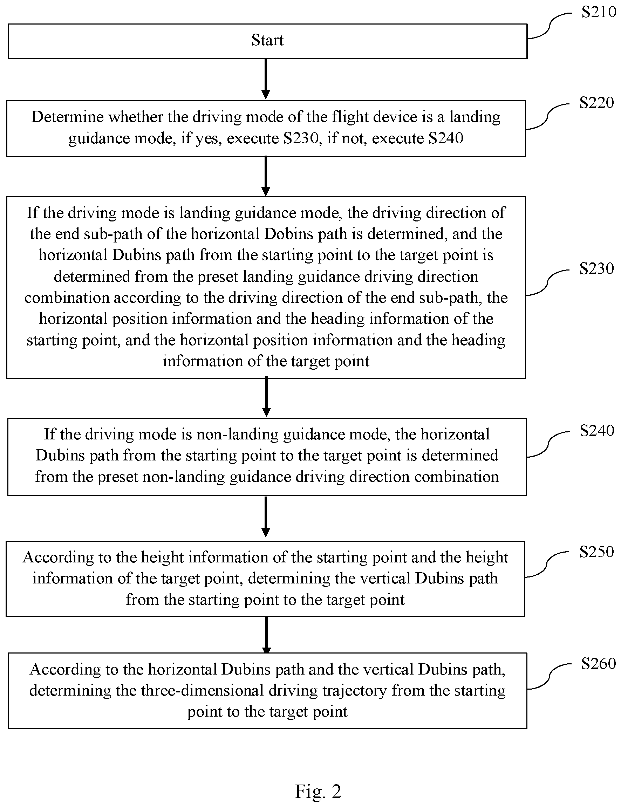

Fig. 2 is a schematic diagram of a second process of a three-dimensional trajectory planning method provided by the embodiment of the present application, the present application embodiment is optimized based on the above embodiment. Optionally, this embodiment provides a detailed explanation of the process on planning a horizontal Dubins path from the starting point to the target point.

Referring to Fig. 2, the method of this embodiment includes but is not limited to the following steps:
S210, start.
S220, determine whether the driving mode of the flight device is a landing guidance mode, if yes, execute S230, if not, execute S240.
S230, if the driving mode is landing guidance mode, the driving direction of the end sub-path of the horizontal Dubins path is determined, and the horizontal Dubins path from the starting point to the target point is determined from the preset landing guidance driving direction combination according to the driving direction of the end sub-path, the horizontal position information and the heading information of the starting point, and the horizontal position information and the heading information of the target point.

In the specific embodiment of this application, if the driving mode is landing guidance mode, the direction of the end sub-path of the horizontal Dubins path is determined, i.e., the flight device finally lands to the target point in clockwise or counterclockwise. Specifically, when the driving mode is landing guidance mode, the end sub-path driving direction of the horizontal Dubins path can be set by the user according to the airspace of the target point location, and the user can specify the end sub-path driving direction is left turn or right turn. Exemplarily, if there is an obstacle in the hovering area of the left turn of the target point location, and there is no obstacle in the hovering area of the right turn, the user can specify the driving direction of the end sub-path to turn right to ensure that the hovering descent will not hit the obstacle.

In the specific embodiment of this application, when the horizontal Dubins path includes three sub-paths, if the driving direction of the end sub-path is left turn, the preset landing guidance driving direction combination comprises: right turn left turn right turn, right turn straight ahead right turn and left turn straight ahead right turn; if the driving direction of end sub-path is right turn, the preset landing guidance driving direction combination comprises: left turn right turn left turn, left turn straight ahead left turn and right turn straight ahead left turn. It should be noted that, for example, right turn left turn right turn is characterized as a first sub-path is right turn, a second sub-path is left turn and the end sub-path is right turn. The horizontal Dubins path from the starting point to the target point is determined from the preset landing guidance driving direction combination according to the driving direction of the end sub-path, the horizontal position information and the heading information of the starting point, and the horizontal position information and the heading information of the target point. Optionally, the determination method of determining the horizontal Dubins path from the starting point to the target point from the preset landing guidance driving direction combination can use the screening mechanism in the relevant technology, and this determination method is not limited in the embodiment of this application.

S240, if the driving mode is non-landing guidance mode, the horizontal Dubins path from the starting point to the target point is determined from the preset non-landing guidance driving direction combination.

In the specific embodiment of this application, the driving mode is a non-landing guidance mode, i.e., the user does not specify the driving direction of the end sub-path, e.g., for tasks such as mapping. Therefore, when the horizontal Dubins path includes three sub-paths, the preset non-landing guidance driving direction combination comprises: right turn left turn right turn, right turn straight ahead right turn, left turn straight ahead right turn, left turn right turn left turn, left turn straight ahead left turn and right turn straight ahead left turn. According to horizontal position information and heading information of a starting point, and horizontal position information and heading information of a target point, a horizontal Dubins path from the starting point to the target point is determined from the preset landing guidance driving direction combination. Optionally, the determination method of determining the horizontal Dubins path from the starting point to the target point from the preset landing guidance driving direction combination can use the screening mechanism in the relevant technology, and this determination method is not limited in the embodiment of this application.

Optionally, the horizontal Dubins path of the flight device can also contain two sub-paths. For example, if the shortest path of the horizontal Dubins path is three sub-paths, e.g., turn left by 5 degrees, go straight, and turn right. Since the angle of the first sub-path left turn is very small or the time of the left turn is negligible, the flight device cannot perform the left turn of 5 degrees, perform the second sub-path straight ahead directly, and then perform the third sub-path right turn.

S250, according to the height information of the starting point and the height information of the target point, determining the vertical Dubins path from the starting point to the target point.

S260, according to the horizontal Dubins path and the vertical Dubins path, determining the three-dimensional driving trajectory from the starting point to the target point.

Optionally, after a three-dimensional driving trajectory from the starting point to the target point is determined, it further comprises: controlling the flight device to drive in accordance with the three-dimensional driving trajectory.

In the specific embodiment of this application, controlling the flight device to drive in accordance with the three-dimensional driving trajectory, comprises: invoking a straight-line travel thread to control the flight device to drive in the straight-line path in the three-dimensional driving path; invoking a circling travel thread to control the flight device to drive in the left turn path and in the right turn path. Optionally, the straight-line travel thread can be controlled by the straight-line guidance law; the circling travel thread can be controlled by the circling guidance law. According to the driving direction corresponding to the current sub-path to be traveled, the travel thread corresponding to the direction of travel can be selected.

Controlling the flight device to drive in accordance with the three-dimensional driving trajectory, comprises: in the process of controlling the flight device to drive in accordance with the current sub-trajectory, if the remaining driving distance of the current sub-trajectory is detected to be less than a preset distance, then driving in accordance with the next sub-trajectory.

In the specific embodiment of this application, in the process of controlling the flight device to drive in accordance with the current sub-trajectory, if the remaining driving distance of the current sub-trajectory is detected to be less than a preset distance, then driving in accordance with the next sub-trajectory. Wherein, the current sub-trajectory is straight-line path, the preset distance is related to the straight-line guidance law; when the current sub-trajectory is a left turn path or a right turn path, the preset distance is related to the circling guidance law. The advantage of this solution is that it can ensure the gentle transition of the guidance law and make the whole three-dimensional driving trajectory smoother. For example, when the current sub-trajectory is a left turn path and the next sub-trajectory is a straight-line path, it will enter the straight-line path earlier when the left-turn curvature is still 25°.

The technical solution provided by this embodiment, by dividing the driving mode into landing guidance mode and non-landing guidance mode, if the driving mode is landing guidance mode, the driving direction of the end sub-path of the horizontal Dubins path is determined, and the horizontal Dubins path from the starting point to the target point is determined from the preset landing guidance driving direction combination according to the driving direction of the end sub-path, the horizontal position information and the heading information of the starting point, and the horizontal position information and the heading information of the target point; if the driving mode is non-landing guidance mode, the horizontal Dubins path from the starting point to the target point is determined from the preset non-landing guidance driving direction combination. The embodiment of this application can accurately plan the horizontal Dubins path from the starting point to the target point for different driving modes on practical applications, which makes the technical solution of this application embodiment have better versatility and can be used for both landing guidance tasks and tasks such as mapping, and the user can specify whether the flight device eventually lands to the target point in clockwise or counterclockwise.

### Embodiment 3

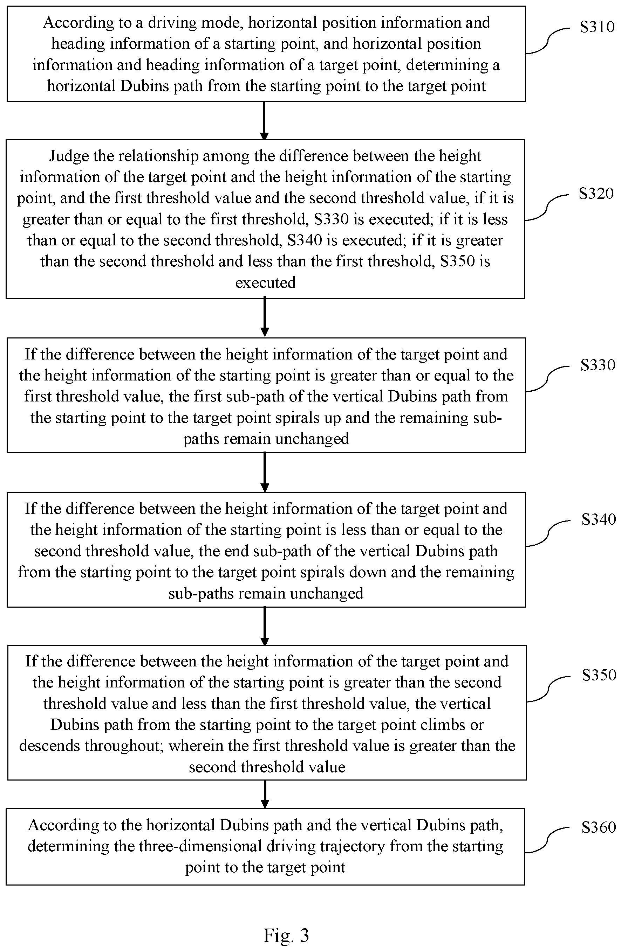

Fig. 3 is a schematic diagram of a third process of a three-dimensional trajectory planning method provided by the embodiment of the present application, the present application embodiment is optimized based on the above embodiment. Optionally, this embodiment provides a detailed explanation of the process on planning a vertical Dubins path from the starting point to the target point.

Referring to Fig. 3, the method of this embodiment includes but is not limited to the following steps:
S310, according to a driving mode, horizontal position information and heading information of a starting point, and horizontal position information and heading information of a target point, determining a horizontal Dubins path from the starting point to the target point.
S320, judge the relationship among the difference between the height information of the target point and the height information of the starting point, and the first threshold value and the second threshold value, if it is greater than or equal to the first threshold, S330 is executed; if it is less than or equal to the second threshold, S340 is executed; if it is greater than the second threshold and less than the first threshold, S350 is executed.
S330, if the difference between the height information of the target point and the height information of the starting point is greater than or equal to the first threshold value, the first sub-path of the vertical Dubins path from the starting point to the target point spirals up and the remaining sub-paths remain unchanged.

In the specific embodiment of this application, according to the obtained height information of the starting point of the trajectory of the flight device and the height information of the target point, the height of the starting point is compared with the height of the target point, and the vertical Dubins path between the starting point and the target point is determined in accordance with the result of the comparison. If the difference between the height information of the target point and the height information of the starting point is greater than or equal to a first threshold value, i.e., the height of the target point differs significantly from the height of the starting point, then the first sub-path of the vertical Dubins path from the starting point to the target point spirals up and the remaining sub-paths remain unchanged. Wherein, the first threshold value is determined by the height control law. Based on the horizontal Dubins path, combined with the vertical Dubins path, the flight device spirals up in the first sub-path to reach the height of the target location; the flight height remains constant in the rest of the sub-paths, and only needs to fly along the horizontal Dubins path. The advantage of this solution is that the average height of the flight device traveling can be satisfied in the whole three-dimensional trajectory to maximize the safety of the flight device in performing the mission.

Exemplarily, if the first threshold value is 10 meters, the vertical Dubins path includes three sub-paths. If the difference between the height of the target point and the height of the starting point is greater than or equal to 10 meters, the first sub-path of the vertical Dubins path from the starting point to the target point spirals up, and the vertical height of the second sub-path and the third sub-path remains unchanged.

S340, if the difference between the height information of the target point and the height information of the starting point is less than or equal to the second threshold value, the end sub-path of the vertical Dubins path from the starting point to the target point spirals down and the remaining sub-paths remain unchanged;

In the specific embodiment of this application, the height information of the starting point is compared with the height of the target point, and the vertical Dubins path between the starting point and the target point is determined in accordance with the result of the comparison. If the difference between the height information of the target point and the height information of the starting point is less than or equal to the second threshold value, i.e., the height of the target point differs significantly from the height of the starting point, then the end sub-path of the vertical Dubins path from the starting point to the target point spirals down and the remaining sub-paths remain unchanged; wherein, the second threshold value is determined by the height control law. Based on the horizontal Dubins path, combined with the vertical Dubins path, the flight height of the flight device is first kept constant and follows the horizontal Dubins path; at the end sub-path, it spirals down to the height of the target position. The advantage of this solution is that the average height of the flight device traveling can be satisfied in the whole three-dimensional trajectory to maximize the safety of the flight device in performing the mission.

Exemplarily, if the second threshold value is 10 meters, the vertical Dubins path includes three sub-paths. If the difference between the height of the target point and the height of the starting point is less than or equal to minus 10 meters, the third sub-path of the vertical Dubins path from the starting point to the target point spirals down, and the vertical height of the first sub-path and the second sub-path of the vertical Dubins path from the starting point to the target point remains unchanged.

S350, if the difference between the height information of the target point and the height information of the starting point is greater than the second threshold value and less than the first threshold value, the vertical Dubins path from the starting point to the target point climbs or descends throughout; wherein the first threshold value is greater than the second threshold value.

In the specific embodiment of this application, the height information of the starting point is compared with the height of the target point, and the vertical Dubins path between the starting point and the target point is determined in accordance with the result of the comparison. If the difference between the height information of the target point and the height information of the starting point is greater than the second threshold value and less than the first threshold value, i.e., the height of the target point is not much different from the height of the starting point. If the height of the target point is slightly higher than the height of the starting point, then a short climb is accompanied during the vertical Dubins path from the starting point to the target point; if the height of the target point is slightly lower than the height of the starting point, a short descent is accompanied during the vertical Dubins path from the starting point to the target point. It should be noted that in the horizontal direction, the horizontal Dubins path of the above-mentioned embodiment is still used.

Exemplarily, if the first threshold value is 10 meters, the second threshold value is minus 10 meters. When the difference between the height information of the target point and the height information of the starting point is greater than minus 10 meters and less than 10 meters, if the difference between the height information of the target point and the height information of the starting point is greater than 0 meters and less than 10 meters, a short climb is accompanied during the vertical Dubins path from the starting point to the target point; if the difference between the height information of the target point and the height information of the starting point is greater than minus 10 meters and less than 0 meters, then a short descent is accompanied during the vertical Dubins path from the starting point to the target point.

S360, according to the horizontal Dubins path and the vertical Dubins path, determining the three-dimensional driving trajectory from the starting point to the target point.

The technical solution provided by this embodiment, by comparing the difference between the height information of the starting point and the height information of the target point, if the difference between the height information of the target point and the height information of the starting point is greater than or equal to the first threshold, then the first sub-path of the vertical Dubins path from the starting point to the target point spirals up and the remaining sub-paths remain unchanged; if the difference between the height information of the target point and the height information of the starting point is less than or equal to the second threshold, then the end sub-path of the vertical Dubins path from the starting point to the target point spirals down and the remaining sub-paths remain unchanged; if the difference between the height information of the target point and the height information of the starting point is greater than the second threshold value and less than the first threshold value, then the vertical Dubins path from the starting point to the target point climbs or descends throughout; wherein the first threshold value is greater than the second threshold value. By comparing the difference between the height information of the starting point and the height information of the target point, this application embodiment can accurately plan the vertical Dubins path from the starting point to the target point for the actual applications, which makes the technical solution of this application embodiment have better versatility. In the embodiment of this application, the average height of the flight equipment traveling can be satisfied to maximize in the whole three-dimensional trajectory, thus enhancing the safety of the flight equipment in performing the task.

### Embodiment 4

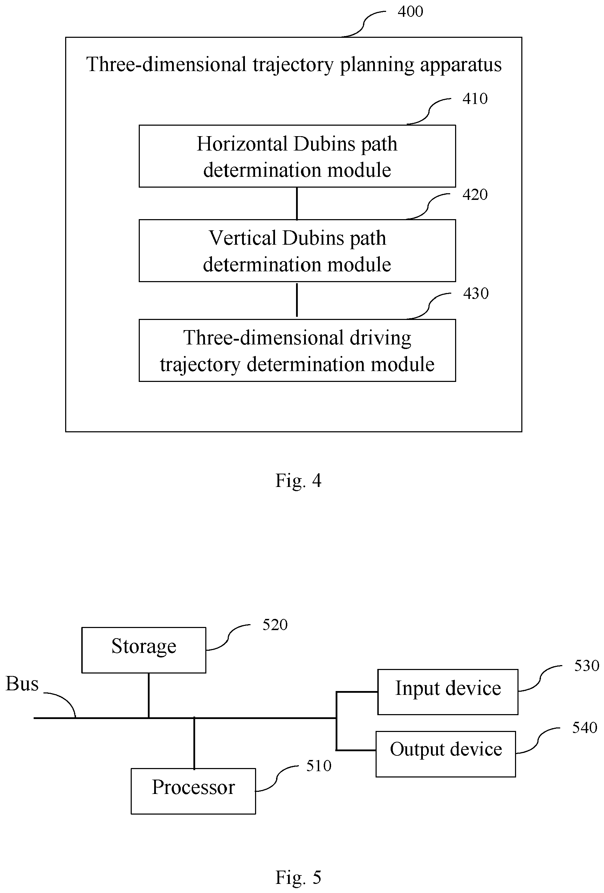

Fig. 4 is a structure diagram of a structure of a three-dimensional trajectory planning apparatus provided by the embodiment of the present application, referring to Fig. 4, the three-dimensional trajectory planning apparatus can include:
a horizontal Dubins path determination module 410 for determining a horizontal Dubins path from the starting point to the target point according to a driving mode, horizontal position information and heading information of a starting point, and horizontal position information and heading information of a target point.
a vertical Dubins path determination module 420 for determining a vertical Dubins path from the starting point to the target point according to the height information of the starting point and the height information of the target point.
a three-dimensional driving trajectory determination module 430 for determining a three-dimensional driving trajectory from the starting point to the target point according to the horizontal Dubins path and the vertical Dubins path.

Further, the above-mentioned horizontal Dubins path determination module 410, which can be specifically used for: when the horizontal Dubins path includes three sub-paths, the horizontal Dubins path from the starting point to the target point is determined according to the driving mode, horizontal position information and heading information of the starting point, and the horizontal position information and the heading information of the target point, it comprises: if the driving mode is landing guidance mode, then the driving direction of the end sub-path of the horizontal Dubins path is determined, and the horizontal Dubins path from the starting point to the target point is determined from the preset landing guidance driving direction combination according to the driving direction of the end sub-path, the horizontal position information and the heading information of the starting point, and the horizontal position information and the heading information of the target point; if the driving mode is non-landing guidance mode, the horizontal Dubins path from the starting point to the target point is determined from the preset non-landing guidance driving direction combination.

Optionally, when the horizontal Dubins path includes three sub-paths, if the driving direction of the end sub-path is left turn, the preset landing guidance driving direction combination comprises: right turn left turn right turn, right turn straight ahead right turn and left turn straight ahead right turn; if the driving direction of end sub-path is right turn, the preset landing guidance driving direction combination comprises: left turn right turn left turn, left turn straight ahead left turn and right turn straight ahead left turn; the preset non-landing guidance driving direction combination comprises: right turn left turn right turn, right turn straight ahead right turn, left turn straight ahead right turn, left turn right turn left turn, left turn straight ahead left turn and right turn straight ahead left turn.

Further, the above-mentioned vertical Dubins path determination module 420, which can be specifically used for: when the vertical Dubins path comprises three sub-paths, the vertical Dubins path from the starting point to the target point is determined according to the height information of the starting point and the height information of the target point, it comprises: if the height information of the target point exceeds the threshold value comparing with the height information of the starting point, then the first sub-path of the vertical Dubins path from the starting point to the target point spirals up and the remaining sub-paths remain unchanged; if the height information of the target point is lower than the threshold value comparing with the height information of the starting point, then the end sub-path of the vertical Dubins path from the starting point to the target point spirals down and the remaining sub-paths remain unchanged; if the difference between the height information of the target point and the height information of the starting point is within the threshold value, the vertical Dubins path from the starting point to the target point climbs or descends throughout.

Further, the above three-dimensional trajectory planning apparatus, also include: a flight device control module for controlling the flight device to drive in accordance with the three-dimensional driving trajectory.

Further, the above three-dimensional trajectory planning apparatus is specifically for controlling the flight device to drive in accordance with the three-dimensional driving trajectory, it comprises: invoking a straight-line travel thread to control the flight device to drive in the straight-line path in the three-dimensional driving path; invoking a circling travel thread to control the flight device to drive in the left turn path and in the right turn path.

Further, the above three-dimensional trajectory planning apparatus is specifically for, the driving trajectory includes three sub-trajectories, controlling the flight device to drive in accordance with the three-dimensional driving trajectory, comprises: in the process of controlling the flight device to drive in accordance with the current sub-trajectory, if the remaining driving distance of the current sub-trajectory is detected to be less than a preset distance, then driving in accordance with the next sub-trajectory.

The three-dimensional trajectory planning apparatus provided in this embodiment can be applied to the three-dimensional trajectory planning method provided in any of the above embodiments, with have corresponding functions and beneficial effects.

### Embodiment 5

According to the embodiments of the present application, the present application also provides an electronic device and a computer-readable storage medium.

As Fig. 5 shows, a block diagram of an electronic device for a three-dimensional trajectory planning method according to the embodiment of the present application. The electronic device is intended to represent various forms of digital computers, such as, laptops, desktop computers, workstations, personal digital assistants, servers, blade servers, mainframe computers, and other suitable computers. The electronic device can also represent various forms of mobile devices, such as personal digital processor, cellular phones, smart phones, wearable devices, and other similar computing devices. The components shown herein, their connections and relationships, and their functions are intended as examples only, and are not intended to limit the implementations of the present application described and/or claimed herein.

As shown in Fig. 5, the electronic device includes: one or more processors 510, a storage 520, and interfaces for connecting different components, including a high-speed interface and a low-speed interface. The components are interconnected using different buses and can be mounted on a common motherboard or otherwise mounted as desired. The processor can process instructions for execution within the electronic device, including the instructions stored in or on memory to display graphical information of the GUI on an external input/output device (e.g., a display device coupled to the interface). In other implementations, multiple processors and/or multiple buses can be worked with multiple memories and multiple memories, if desired. Similarly, a plurality of electronic devices can be connected, with individual devices providing some of the necessary operations (e.g., as a server array, a group of blade servers, or a multiprocessor system). An example of a processor 510 is shown in Fig. 5.

Storage 520 is the non-instantaneous computer readable storage medium provided in the present application. Wherein the storage stores instructions executable by at least one processor to cause at least one processor to execute the method of three-dimensional trajectory planning as provided in the present application. The non-instantaneous computer readable storage medium of the present application stores computer instructions that are used to cause the computer to execute the method of three-dimensional trajectory planning provided by the present application.

Storage 520, as a non-instantaneous computer readable storage medium, can be used to store non-instantaneous software programs, non-instantaneous computer-executable programs, and modules, such as program instructions/modules corresponding to the method of three-dimensional trajectory planning in the embodiment of the present application (e.g., horizontal Dubins path determination module 410, vertical Dubins path determination module 420, and three-dimensional driving trajectory determination module 430 shown in the Fig. 4). The processor 510 executes various functional applications of the server as well as data processing by running the non-instantaneous software programs, instructions, and modules stored in the storage 520, i.e., to implement a method for three-dimensional trajectory planning in the method embodiment described above.

Storage 520 can include a stored program area and a stored data area, wherein, the stored program area can store an operating system, an application program required for at least one function; and the stored data area can store data created based on the usage of an electronic device for a three-dimensional trajectory planning, etc. In addition, the storage 520 can include high-speed random access storage, and can also include non-instantaneous storage, such as at least one disk storage device, flash storage device, or other non-instantaneous solid state storage device. In some embodiments, storage 520 optionally includes storage that is remotely located relative to processor 510, and these remote storages can be connected to a three-dimensional trajectory planning electronic device via a network. Examples of the networks include, but are not limited to, the Internet, corporate intranets, local area networks, mobile communication networks, and combinations thereof.

The electronic device for a three-dimensional trajectory planning method may also include: an input device 530 and an output device 540. The processor 510, storage 520, input device 530, and output device 540 may be connected via a bus or otherwise, with connection via a bus being used as an example in Fig. 5.

Input device 530 can receive input numeric or character information, as well as generate key signal input related to user settings and functional control of an electronic device for three-dimensional trajectory planning, such as a touch screen, keypad, mouse, trackpad, touchpad, indicator stick, one or more mouse buttons, trackball, joystick, and other input devices. Output device 540 can include a display device, auxiliary a lighting device (e.g., LED) and a haptic feedback device (e.g., vibration motor), etc. The display device can include, but is not limited to, a liquid crystal display (LCD), a light emitting diode (LED) display, and a plasma display. In some embodiments, the display device can be a touch screen.

Various embodiments of the systems and technologies described herein can be implemented in digital electronic circuit systems, integrated circuit systems, special purpose ASICs (special purpose integrated circuits), computer hardware, firmware, software, and/or combinations thereof. These various embodiments can include: implemented in one or more computer programs, the one or more computer programs can be executed and/or interpreted on a programmable system including at least one programmable processor, the programmable processor can be a dedicated or general-purpose programmable processor, and can receive data and instructions from the storage system, at least one input device, and at least one output device, and transmitting data and instructions to the storage system, the at least one input device, and the at least one output device.

These computing programs (also referred to as programs, software, software applications, or code) include machine instructions for programmable processors and may be implemented using high-level procedural and/or object-oriented programming languages, and/or assembly/machine languages. As used herein, the terms "machine readable medium" and "computer readable medium" refer to any computer program product, device, and/or apparatus (e.g., disk, CD-ROM, memory, programmable logic device (PLD)) used to provide machine instructions and/or data to a programmable processor. Including machine-readable medium that receives machine instructions as machine-readable signals. The term "machine readable signal" refers to any signal used to provide machine instructions and/or data to the programmable processor.

To provide interaction with a user, the systems and techniques described herein can be implemented on a computer having: a display device for displaying information to the user (e.g., a CRT (cathode ray tube) or LCD (liquid crystal display) monitor; and a keyboard and a pointing device (e.g., a mouse or trackball) through which the user may provide input to the computer. Other types of devices may also be used to provide interaction with the user; for example, the feedback provided to the user can be any form of sensory feedback (e.g., visual feedback, auditory feedback, or haptic feedback); and the input from the user may be received in any form (including acoustic input, voice input, or haptic input).

The systems and techniques described herein may be implemented in a computing system including a back-end component (e.g., as a data server), or a computing system including a middleware component (e.g., an application server), or a computing system including a front-end component (e.g., a user computer having a graphical user interface or a web browser through which a user can interact with the described herein), or a computing system including any combination of such back-end components, middleware components, or front-end components. The components of the system can be interconnected via any form or medium of digital data communication (e.g., a communication network). Examples of communication networks include: a local area networks (LAN), a wide area networks (WAN), the Internet, and blockchain network.

A computer system can include a client end and a server end. The client end and the server end are generally remote from each other and typically interact through a communication network. The relationship between the client end and the server end is generated by computer programs that run on corresponding computers and have a client-server end relationship with each other. A server can be a cloud server, also known as a cloud computing server or cloud host, which is a hosting product in the cloud computing service system to solve the deficiencies of traditional physical hosting and VPS services, which are difficult to manage and weak in business scalability.

According to the technical solution of this application embodiment, first, according to the driving mode, horizontal position information and heading information of the starting point, and horizontal position information and heading information of the target point, determining the horizontal Dubins path from the starting point to the target point; then, according to the height information of the starting point and the height information of the target point, determining the vertical Dubins path from the starting point to the target point; finally, according to the horizontal Dubins path and the vertical Dubins path, determining the three-dimensional driving trajectory from the starting point to the target point. The embodiment of this application can extend the two-dimensional Dubins path algorithm to three-dimensional space, and can accurately plan a three-dimensional driving trajectory when position information and heading information of the starting point, and position information and heading information of the target point are given, and the technical solution of this application embodiment is simple and convenient to realize, easy to popularize, and has better versatility.

It should be understood that various forms of processes shown above can be used to reorder, add or delete steps. For example, the steps recorded in this application can be performed in parallel or sequentially or in different order, as long as the desired result of the technical solution disclosed in this application can be achieved, and this application will not be limited herein.

## Claims

1. A three-dimensional trajectory planning method comprises:
determining a horizontal Dubins path from a starting point to a target point based on a driving mode, a horizontal position information and heading information of a starting point, and a horizontal position information and heading information of a target point;
determining a vertical Dubins path from the starting point to the target point based on a height information of the starting point and a height information of the target point,;
determining a three-dimensional driving trajectory from the starting point to the target point based on the horizontal Dubins path and the vertical Dubins path,.

2. The three-dimensional trajectory planning method according to claim 1, wherein when the horizontal Dubins path includes three sub-paths, the horizontal Dubins path from the starting point to the target point is determined according to the driving mode, the horizontal position information and heading information of the starting point, and the horizontal position information and heading information of the target point;
wherein if the driving mode is in a landing guidance mode, the driving direction of an end sub-path of the horizontal Dubins path is determined, and the horizontal Dubins path from the starting point to the target point is determined from a preset landing guidance driving direction combination according to the driving direction of the end sub-path, the horizontal position information and heading information of the starting point, and the horizontal position information and heading information of the target point;
wherein if the driving mode is in a non-landing guidance mode, the horizontal Dubins path from the starting point to the target point is determined from a preset non-landing guidance driving direction combination.

3. The three-dimensional trajectory planning method according to claim 2, wherein if the driving direction of the end sub-path is a left turn, the preset landing guidance driving direction combination comprises: right turn left turn right turn, right turn straight ahead right turn and left turn straight ahead right turn;
wherein if the driving direction of end sub-path is a right turn, the preset landing guidance driving direction combination comprises: left turn right turn left turn, left turn straight ahead left turn and right turn straight ahead left turn;
wherein the preset non-landing guidance driving direction combination comprises: right turn left turn right turn, right turn straight ahead right turn, left turn straight ahead right turn, left turn right turn left turn, left turn straight ahead left turn and right turn straight ahead left turn.

4. The three-dimensional trajectory planning method according to claim 1, wherein when the vertical Dubins path comprises three sub-paths, the vertical Dubins path from the starting point to the target point is determined according to the height information of the starting point and the height information of the target point;
wherein if a difference between the height information of the target point and the height information of the starting point is greater than or equal to a first threshold value, a first sub-path of the vertical Dubins path from the starting point to the target point spirals up and a remaining sub-paths remain unchanged;
wherein if the difference between the height information of the target point and the height information of the starting point is less than or equal to a second threshold value, the end sub-path of the vertical Dubins path from the starting point to the target point spirals down and the remaining sub-paths remain unchanged;
wherein if the difference between the height information of the target point and the height information of the starting point is greater than the second threshold value and less than the first threshold value, the vertical Dubins path from the starting point to the target point climbs or descends throughout, and wherein the first threshold value is greater than the second threshold value.

5. The three-dimensional trajectory planning method according to claim 1, after a three-dimensional driving trajectory from the starting point to the target point is determined, controlling a flight device to drive in accordance with the three-dimensional driving trajectory.

6. The three-dimensional trajectory planning method according to claim 5, further comprising:
invoking a straight-line travel thread to control the flight device to drive in a straight-line path in a three-dimensional driving path;
invoking a circling travel thread to control the flight device to drive in a left turn path and in the right turn path.

7. The three-dimensional trajectory planning method according to claim 5, further comprising:
in a process of controlling the flight device to drive in accordance with the current sub-trajectory, if a remaining driving distance of a current sub-trajectory is detected to be less than a preset distance, then driving in accordance with a next sub-trajectory.

8. A three-dimensional trajectory planning apparatus comprising:
a horizontal Dubins path determination module;
a vertical Dubins path determination module; and
a three-dimensional driving trajectory determination module;
wherein the horizontal Dubins path determination module for determining a horizontal Dubins path from a starting point to the target point is based on a driving mode, horizontal position information and heading information of a starting point, and horizontal position information and heading information of a target point;
wherein the vertical Dubins path determination module for determining a vertical Dubins path from the starting point to the target point is based on a height information of the starting point and a height information of the target point;
wherein the three-dimensional driving trajectory determination module for determining a three-dimensional driving trajectory from the starting point to the target point is based on a horizontal Dubins path and a vertical Dubins path.

9. An electronic device comprising:
one or more processors;
a storage device for storing one or more programs;
wherein when the one or more programs are executed by the one or more processors, causing the one or more processors to implement the three-dimensional trajectory planning method as claimed in any one of claims 1-7.

10. A computer-readable storage medium storing a computer program, wherein
the computer program is executed by a processor, which implements the three-dimensional track planning method according to any one of Claims 1-7.
